# EUROPEAN PATENT APPLICATION

(11) **EP 4 755 694 A1**
(43) Date of publication of application: **10.06.2026**
(21) Application number: 25212930.9
(22) Date of filing: 03.11.2025
(51) Int. Cl.: B60L 3/00, B60L 3/04, B60L 50/10, B60L 50/16, B60W 20/50

(54) **CONTROL DEVICE FOR ELECTRIC VEHICLE**

(30) Priority: 03.12.2024 JP 2024210064
(71) Applicant: Suzuki Motor Corporation, Shizuoka 432-8611 (JP)
(72) Inventor: ISHIHARA, Toru, HAMAMATSU-SHI, 432-8611 (JP); NAKAMURA, Yusuke, HAMAMATSU-SHI, 432-8611 (JP)
(74) Representative: Plasseraud IP

(57) **Abstract**

[Object]

Provided is a control device for an electric vehicle capable of maintaining the traveling of a vehicle while ensuring work safety.

[Solution]

In a control device for an electric vehicle provided with an HVIL line wired to the high-voltage system to be in a connected state when there is no abnormality in a high-voltage system and to be in an open state when there is an abnormality in the high-voltage system, control is executed such that an electric power interruption state of interrupting electric power supplied to the high-voltage system is maintained (S8) if the electric vehicle is stopped (S6) and an electric power supply state of supplying electric power to the high-voltage system is maintained (S12) if the electric vehicle is traveling (S6) when detecting that the HVIL line is in the open state (S5).

## Description

### [Technical Field]

This invention relates to a control device for an electric vehicle.

### [Background of the Invention]

Conventionally, Patent Literature 1 proposes a high-voltage interlock loop circuit that automatically interrupts electric power from a high-voltage power source when a connector is removed while a voltage is applied, in order to prevent an operator from being exposed to a high voltage.

In this way, since the conventional technology has a possibility of work mistakes such as disassembling a high-voltage system without turning off an ignition switch when detecting that the high-voltage interlock loop circuit is open, electric power from the high-voltage power source is interrupted to ensure work safety.

### [Prior Art]

### [Patent Literature]

[Patent Literature 1] JP 2013-98056 A

### [Summary of the Invention]

### [Problem to be solved by the Invention]

When it is detected that the high-voltage interlock loop circuit is open due to work mistakes, it is necessary to interrupt electric power from the high-voltage power source in order to ensure safety. Although there is a possibility of work mistakes when it is detected that the high-voltage interlock loop circuit is open, there is also a possibility that the high-voltage interlock loop circuit may be disconnected or shorted to power.

Even when the high-voltage interlock loop circuit is open, this does not affect the traveling of the vehicle. For this reason, when it is detected that the high-voltage interlock loop circuit is open due to the disconnection or short to power of the high-voltage interlock loop circuit, it is desirable to maintain the vehicle traveling.

However, it is not possible to electrically distinguish whether the high-voltage interlock loop circuit is open due to work mistakes or the disconnection or short to power of the high-voltage interlock loop circuit. Therefore, the conventional technology has a problem in that the vehicle traveling cannot be maintained while ensuring work safety.

This invention has been made in view of the above-described circumstances and an object thereof is to provide a control device for an electric vehicle capable of maintaining the traveling of a vehicle while ensuring work safety.

### [Means to solve the problem]

A control device for an electric vehicle according to this invention is a control device for an electric vehicle equipped with a high-voltage system and a high-voltage interlock line wired to the high-voltage system to be in a connected state when there is no abnormality in the high-voltage system and to be in an open state when there is an abnormality in the high-voltage system, including: a control unit executing control to maintain an electric power interruption state of interrupting electric power supplied to the high-voltage system if the electric vehicle is stopped and to maintain an electric power supply state of supplying electric power to the high-voltage system if the electric vehicle is traveling when detecting that the high-voltage interlock line is in the open state.

### [Effect of the Invention]

According to this invention, it is possible to provide a control device for an electric vehicle capable of maintaining the traveling of a vehicle while ensuring work safety.

### [Brief description of figures]

[Fig. 1] Fig. 1 is a schematic diagram of a hybrid vehicle equipped with a control device for an electric vehicle according to an embodiment of this invention.
[Fig. 2] Fig. 2 is a flowchart showing an HVIL control operation of a control device for an electric vehicle according to an embodiment of this invention.
[Fig. 3] Fig. 3 is a flowchart continuing from Fig. 2.

### [Embodiment(s) of the Invention]

A control device for an electric vehicle according to an embodiment of this invention is a control device for an electric vehicle equipped with a high-voltage system and a high-voltage interlock line wired to the high-voltage system to be in a connected state when there is no abnormality in the high-voltage system and to be in an open state when there is an abnormality in the high-voltage system, including: a control unit executing control to maintain an electric power interruption state of interrupting electric power supplied to the high-voltage system if the electric vehicle is stopped and to maintain an electric power supply state of supplying electric power to the high-voltage system if the electric vehicle is traveling when detecting that the high-voltage interlock line is in the open state. Accordingly, the control device for the electric vehicle according to an embodiment of this invention can maintain the traveling of the vehicle while ensuring work safety.

### [Embodiments]

Hereinafter, a hybrid vehicle equipped with a control device for an electric vehicle according to an embodiment of this invention will be described with reference to the drawings.

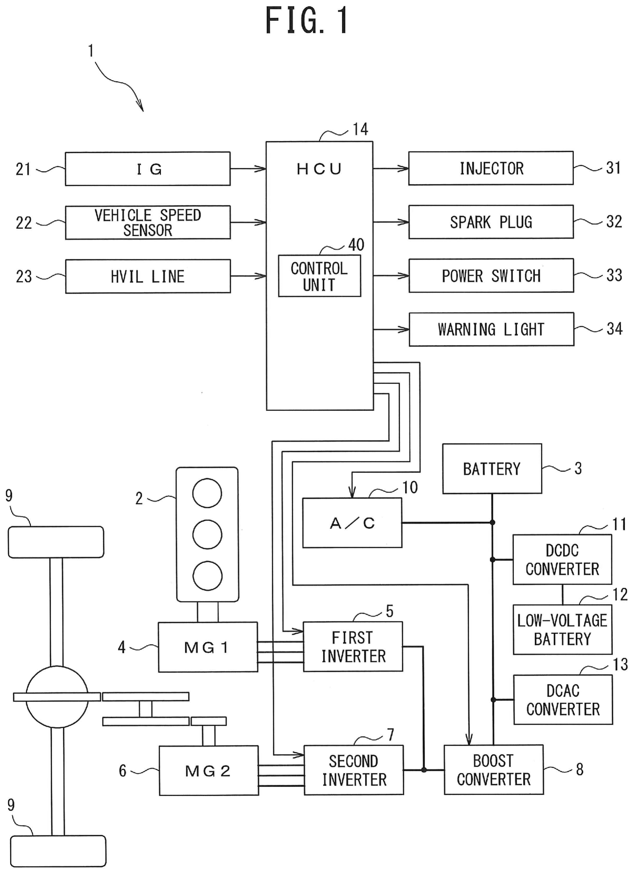

As shown in Fig. 1, a hybrid vehicle 1 includes an engine 2, a high-voltage battery 3, a first motor 4 (hereinafter, also referred to as "MG 1"), a first inverter 5, a second motor 6 (hereinafter, also referred to as "MG 2"), a second inverter 7, a boost converter 8, drive wheels 9, an air conditioner (hereinafter, also referred to as "A/C") 10, a DCDC converter 11, a low-voltage battery 12, a DCAC converter 13, and a hybrid controller (hereinafter, simply referred to as "HCU") 14.

The engine 2 is formed with a plurality of cylinders. In this embodiment, the engine 2 generates power by performing a series of four strokes for each cylinder, which are an intake stroke, a compression stroke, an expansion stroke, and an exhaust stroke.

The high-voltage battery 3 is a rechargeable secondary battery, for example a lithium-ion battery. The high-voltage battery 3 stores the electric power generated by the MG 1 and the MG 2, and supplies the electric power to drive the MG 1 and the MG 2.

The MG 1 is provided to be interlocked with the crankshaft of the engine 2. The MG 1 is connected to the high-voltage battery 3 via the first inverter 5 and the boost converter 8. The MG 1 has a function of an electric motor that starts the engine 2 by rotating using electric power supplied from the high-voltage battery 3 and a function of a generator that converts power generated by the engine 2 into electric power.

The MG 2 is provided to be interlocked to the drive wheels 9 via a power transmission member such as a gear mechanism. The MG 2 is connected to the high-voltage battery 3 via the second inverter 7 and the boost converter 8.

The MG 2 has a function of an electric motor that rotates the drive wheels 9 by rotating using electric power supplied from the high-voltage battery 3 and the MG 1 and a function of a generator that converts the rotational force of the drive wheels 9 into electric power.

The boost converter 8 is provided between the high-voltage battery 3 and the first and second inverters 5 and 7, boosts the voltage of the electric power supplied from the high-voltage battery 3 to the first and second inverters 5 and 7, and reduces the voltage of the electric power supplied from the first and second inverters 5 and 7 to the high-voltage battery 3.

The A/C 10 operates with electric power supplied from the high-voltage battery 3 and adjusts the temperature inside the vehicle cabin. The DCDC converter 11 reduces the voltage of the electric power stored in the high-voltage battery 3 and supplies the voltage to the low-voltage battery 12.

The low-voltage battery 12 stores electric power to be supplied to electric loads such as headlights, lamps and meters provided on an instrument panel, and a car navigation system.

The DCAC converter 13 converts the electric power stored in the high-voltage battery 3 from direct current to alternating current power, and supplies the AC power to, for example, an electrical load that operates on alternating current and is connected to an outlet provided in the hybrid vehicle 1.

The HCU 14 is configured by a computer unit equipped with a CPU (Central Processing Unit), a RAM (Random Access Memory), a ROM (Read Only Memory), a flash memory for storing backup data, etc., an input port, and an output port.

The ROM of this computer unit stores various constants, various maps, etc., as well as a program for causing the computer unit to function as the HCU 14. That is, the CPU executes the programs stored in the ROM using the RAM as a working area, whereby this computer unit functions as the HCU 14 in this embodiment.

Various sensors including an ignition switch (hereinafter, also referred to simply as "IG") 21, a vehicle speed sensor 22 that detects a vehicle speed, and a high-voltage interlock line (hereinafter, also simply referred to as "HVIL line") 23 are connected to the input port of the HCU 14.

The HVIL line 23 is wired to the high-voltage system to be in a connected state when there is no abnormality in the high-voltage system and to be in an open state when there is an abnormality in the high-voltage system. Specifically, the HVIL line 23 is connected to earth via a certain load after passing through each part of the high-voltage system with the input port side of the HCU 14 pulled up to a low voltage (for example, 5 V).

In this embodiment, the HCU 14 determines that the HVIL line 23 is in an open state if the voltage of the input port to which the HVIL line 23 is connected (hereinafter, also simply referred to as the "HVIL line voltage") is within a first range of 4.89 V to 5 V.

If the HVIL line voltage is within the first range, there is a possibility that the HVIL line 23 is shorted to power. However, when the HVIL line 23 is shorted to power, the HCU 14 determines that the HVIL line 23 is in an open state because the HCU executes the same process as when the HVIL line 23 is in an open state.

The HCU 14 determines that the HVIL line 23 is in a connected state if the HVIL line voltage is within a second range of 2.21 V to 3.09 V. The HCU 14 determines that the HVIL line 23 has a ground fault if the HVIL line voltage is within a third range of 0 V to 1.02 V.

The HVIL line voltage is within one of the first to third ranges depending on the state of the HVIL line 23. If the HVIL line voltage is not within any of the first to third ranges, the HCU 14 determines that the HVIL line voltage is not changing because the HVIL line voltage may be in the process of changing.

In this embodiment, the high-voltage system includes high-voltage devices, that is, a first inverter 5, a second inverter 7, a boost converter 8, the A/C 10, a DCDC converter 11, and a DCAC converter 13.

The HVIL line 23 is provided in a connector (hereinafter, also simply referred to as a "high-voltage connector") that connects high-voltage devices constituting the high-voltage system. In other words, the HVIL line 23 is wired to be in a connected state when all of the high-voltage connectors are normally connected, and to be in an open state when any of the high-voltage connectors is not normally connected.

Various control objects including the first inverter 5, the second inverter 7, the boost converter 8, the A/C 10, an injector 31 that supplies fuel to the engine 2, a spark plug 32 that ignites the combustion chamber of the engine 2, a power switch 33, and a warning light 34 are connected to the output ports of the HCU 14.

Furthermore, when the engine 2 is configured by an engine that does not require a spark plug, such as a diesel engine, the spark plug 32 is excluded from the configuration of the hybrid vehicle 1.

The power switch 33 switches the power state of the high-voltage system between the electric power supply state in which electric power is supplied from the high-voltage battery 3 to the high-voltage system and the electric power interruption state in which electric power supplied from the high-voltage battery 3 to the high-voltage system is interrupted.

The HCU 14 controls various control objects connected to the output ports based on information obtained from various sensors connected to the input ports. The HCU 14 has a function as a control unit 40 that executes control to maintain the electric power interruption state if the hybrid vehicle 1 is stopped and to maintain the electric power supply state if the hybrid vehicle 1 is traveling when detecting that the HVIL line 23 is in the open state.

Specifically, the HCU 14 controls the power switch 33 to maintain the electric power interruption state if the hybrid vehicle 1 is stopped and controls the power switch 33 to maintain the electric power supply state if the hybrid vehicle 1 is traveling when detecting that the HVIL line 23 is in the open state based on the HVIL line voltage. The HCU 14 determines whether or not the hybrid vehicle 1 is stopped based on the detection result of the vehicle speed sensor 22.

The HCU 14 executes control to maintain the electric power supply state and start the engine 2 if the next ignition cycle is started when maintaining the electric power supply state by detecting that the HVIL line 23 is in the open state.

That is, the HCU 14 executes control to maintain the electric power supply state and to start the engine 2 if the IG 21 has been switched to ON after the IG 21 has been switched to OFF while maintaining the electric power supply state by detecting that the HVIL line 23 is in the open state.

When the HCU 14 executes control to start the engine 2, the first inverter 5 is controlled to drive the MG 1 and rotate the crankshaft of the engine 2 until the engine 2 operates autonomously, and the supply of fuel by the injector 31 and ignition by the spark plug 32 are started.

The HCU 14 executes control to start the engine 2 if the engine 2 is stopped while the hybrid vehicle 1 is traveling when detecting that the HVIL line 23 is in the open state.

Therefore, the HCU 14 executes control to maintain the electric power supply state if the hybrid vehicle 1 is traveling and to start the engine 2 if the engine 2 is stopped when detecting that the HVIL line 23 is in the open state.

When a ground fault of the HVIL line 23 is detected, the HCU 14 executes control to maintain the electric power supply state regardless of whether or not the hybrid vehicle 1 is traveling and to start the engine 2 if the engine 2 is stopped.

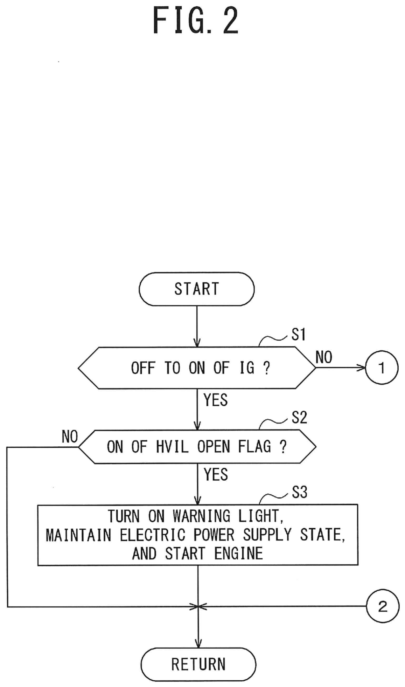

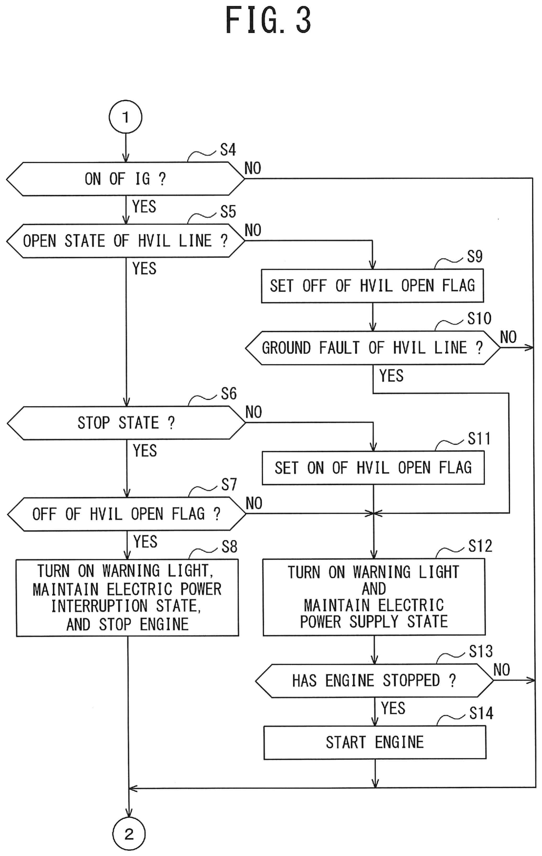

The HVIL control operation of the HCU 14 with the above-described configuration will be described with reference to Figs. 2 and 3. Furthermore, the HVIL control operation described below is executed repeatedly while the HCU 14 is in operation.

First, in S1 shown in Fig. 2, the HCU 14 determines whether or not the IG 21 has been switched from OFF to ON. When it is determined that the IG 21 has been switched from OFF to ON in S1, the HCU 14 executes the process of S2. When it is determined that the IG 21 has not been turned from OFF to ON in S1, the HCU 14 executes the process of S4.

In S2, the HCU 14 determines whether or not the HVIL open flag, indicating that the HVIL line 23 is an open state while the hybrid vehicle 1 is traveling, is ON.

When it is determined that the HVIL open flag is ON in S2, the HCU 14 executes the process of S3. When it is determined that the HVIL open flag is not ON in S2, the HCU 14 ends the HVIL control operation.

In S3, the HCU 14 turns on the warning light 34, maintains the electric power supply state, and starts the engine 2. After executing the process of S3, the HCU 14 ends the HVIL control operation.

In S4 shown in Fig. 3, the HCU 14 determines whether or not the IG 21 is ON. When it is determined that the IG 21 is ON in S4, the HCU 14 executes the process of S5. When it is determined that the IG 21 is not ON in S4, the HCU 14 ends the HVIL control operation.

In S5, the HCU 14 determines whether or not the HVIL line 23 is in the open state. When it is determined that the HVIL line 23 is in the open state in S5, the HCU 14 executes the process of S6. When it is determined that the HVIL line 23 is not in the open state in S5, the HCU 14 executes the process of S9.

In S6, the HCU 14 determines whether or not the hybrid vehicle 1 is stopped. When it is determined that the hybrid vehicle 1 is stopped in S6, the HCU 14 executes the process of S7. When it is determined that the hybrid vehicle 1 is not stopped in S6, that is, the hybrid vehicle 1 is traveling, the HCU 14 executes the process of S11.

In S7, the HCU 14 determines whether or not the HVIL open flag is OFF. When it is determined that the HVIL open flag is OFF in S7, the HCU 14 executes the process of S8. When it is determined that the HVIL open flag is not OFF in S7, the HCU 14 executes the process of S12.

In S8, the HCU 14 turns on the warning light 34, maintains the electric power interruption state, and stops the engine 2. After executing the process of S8, the HCU 14 ends the HVIL control operation. In S9, the HCU 14 sets the HVIL open flag to OFF. After executing the process of S9, the HCU 14 executes the process of S10.

In S10, the HCU 14 determines whether or not the HVIL line 23 has a ground fault. When it is determined that the HVIL line 23 has a ground fault in S10, the HCU 14 executes the process of S12. When it is determined that the HVIL line 23 does not have a ground fault in S10, the HCU 14 ends the HVIL control operation.

In S11, the HCU 14 sets the HVIL open flag to ON. After executing the process of S11, the HCU 14 executes the process of S12. In S12, the HCU 14 turns on the warning light 34 and maintains the electric power supply state. After executing the process of S12, the HCU 14 executes the process of S13.

In S13, the HCU 14 determines whether or not the engine 2 is stopped. When it is determined that the engine 2 is stopped in S13, the HCU 14 executes the process of S14. When it is determined that the engine 2 is not stopped in S13, the HCU 14 ends the HVIL control operation. In S14, the HCU 14 starts the engine 2. After executing the process of S14, the HCU 14 ends the HVIL control operation.

As described above, since the control device for the electric vehicle according to this embodiment executes control to maintain the electric power interruption state if the hybrid vehicle 1 is stopped and maintain the electric power supply state if the hybrid vehicle 1 is traveling when detecting that the HVIL line 23 is in the open state, it is possible to ensure the work safety and to maintain the traveling of the hybrid vehicle 1.

Further, when the control device for the electric vehicle according to this embodiment detects that the HVIL line 23 is in the open state and maintains the electric power supply state, the electric power supply state is maintained if the next ignition cycle is started, so that the hybrid vehicle 1 can be caused to travel even in the next ignition cycle.

Further, since the control device for the electric vehicle according to this embodiment executes control to start the engine 2 if the engine 2 is stopped while the hybrid vehicle 1 is traveling when detecting that the HVIL line 23 is in the open state, it is possible to notify the abnormal state by sound or vibration emitted from the engine 2.

Further, since the control device for the electric vehicle according to this embodiment executes control to start the engine 2 if the next ignition cycle is started when maintaining the electric power supply state by detecting that the HVIL line 23 is in the open state, it is possible to notify the abnormal state by sound or vibration emitted from the engine 2.

Further, since the control device for the electric vehicle according to this embodiment executes control to start the engine 2 if the engine 2 is stopped when detecting a ground fault of the HVIL line 23, it is possible to notify the abnormal state by sound or vibration emitted from the engine 2.

Further, since the control device for the electric vehicle according to this embodiment stops the engine 2 by turning on the warning light 34 if the hybrid vehicle 1 is stopped when detecting that the HVIL line 23 is in the open state, the driver or service man can be notified of the abnormal state.

Further, since the control device for the electric vehicle according to this embodiment turns on the warning light 34 if the hybrid vehicle 1 is traveling and starts the engine 2 if the engine 2 is stopped when detecting that the HVIL line 23 is in the open state, the driver can be notified of the abnormal state and encouraged to bring the hybrid vehicle 1 to a dealer as soon as possible.

Further, since the control device for the electric vehicle according to this embodiment turns on the warning light 34 if the hybrid vehicle 1 is traveling and starts the engine 2 if the engine 2 is stopped when detecting that the HVIL line 23 is in the open state, it is possible to notify the service man that electric power is being supplied and therefore suppress work mistakes such as disassembling the high-voltage system without turning off the IG 21.

Further, since the control device for the electric vehicle according to this embodiment turns on the warning light 34 when detecting a ground fault of the HVIL line 23 and starts the engine 2 if the engine 2 is stopped, the driver can be notified of the abnormal state and encouraged to bring the hybrid vehicle 1 to a dealer as soon as possible.

Further, since the control device for the electric vehicle according to this embodiment starts the engine 2 if the engine 2 is stopped when detecting a ground fault of the HVIL line 23, it is possible to notify the service man that electric power is being supplied and therefore suppress work mistakes such as disassembling the high-voltage system without turning off the IG 21.

Furthermore, in this embodiment, an example has been described in which the HVIL line 23 is provided in the high-voltage connector. In this way, the HVIL line 23 may be provided to detect the abnormality of the high-voltage system.

For example, the HVIL line 23 may be wired to a case that houses one or more high-voltage devices, and may be wired to be in a connected state when the case is closed, and in an open state when the case is open.

Further, in this embodiment, an example has been described in which the high-voltage system is configured by the high-voltage devices, that is, the first inverter 5, the second inverter 7, the boost converter 8, the A/C 10, the DCDC converter 11, and the DCAC converter 13.

On the other hand, the high-voltage system may be configured by one or more high-voltage devices among the first inverter 5, the second inverter 7, the boost converter 8, the A/C 10, the DCDC converter 11, and the DCAC converter 13. Further, the high-voltage system may further include other high-voltage devices such as the MG 1 and the MG 2.

Although embodiments of this invention have been described above, it is apparent that modifications can be made to the embodiments without departing from the scope of this invention. Embodiments of this invention are disclosed with the understanding that equivalents of such modifications are intended to be included within the scope of this invention as defined by the appended claims.

### (DESCRIPTION OF REFERENCE NUMERALS)

1 ... Hybrid vehicle (electric vehicle), 2 ... Engine, 5 ... First inverter (high-voltage system), 7 ... Second inverter (high-voltage system), 8 ... Boost converter (high-voltage system), 10 ... A/C (high-voltage system), 11 ... DCDC converter (high-voltage system), 13 ... DCAC converter (high-voltage system), 23 ... HVIL line (high-voltage interlock line), 40 ... Control unit

## Claims

1. A control device for an electric vehicle (1) equipped with a high-voltage system (5, 7, 8, 10, 11, 13) and a high-voltage interlock line (23) wired to the high-voltage system (5, 7, 8, 10, 11, 13) to be in a connected state when there is no abnormality in the high-voltage system (5, 7, 8, 10, 11, 13) and to be in an open state when there is an abnormality in the high-voltage system (5, 7, 8, 10, 11, 13) comprising:
a control unit (40) executing control to maintain an electric power interruption state of interrupting electric power supplied to the high-voltage system (5, 7, 8, 10, 11, 13) if the electric vehicle (1) is stopped and to maintain an electric power supply state of supplying electric power to the high-voltage system (5, 7, 8, 10, 11, 13) if the electric vehicle (1) is traveling when detecting that the high-voltage interlock line (23) is in the open state.

2. The control device for the electric vehicle (1) as claimed in claim 1,
wherein the control unit (40) executes control to maintain the electric power supply state if the next ignition cycle is started when maintaining the electric power supply state by detecting that the high-voltage interlock line (23) is in the open state.

3. The control device for the electric vehicle (1) as claimed in claim 1,
wherein the electric vehicle (1) is provided with an engine (2), and
wherein the control unit (40) executes control to start the engine (2) if the engine (2) is stopped while the electric vehicle (2) is traveling when detecting that the high-voltage interlock line (23) is in the open state.

4. The control device for the electric vehicle (1) as claimed in claim 3,
wherein the control unit (40) executes control to start the engine (2) if the next ignition cycle is started when maintaining the electric power supply state by detecting that the high-voltage interlock line (23) is in the open state.

5. The control device for the electric vehicle (1) as claimed in claim 1,
wherein the electric vehicle (1) is provided with an engine (2), and
wherein the control unit (40) executes control to start the engine (2) if the engine (2) is stopped when detecting that the high-voltage interlock line (23) has a ground fault.
